(19) Europäisches Patentamt
European Patent Office
Office européen des brevets

(11) EP 3 079 815 B1

(12) FASCICULE DE BREVET EUROPEEN

(45) Date de publication et mention de la délivrance du brevet:
**20.02.2019 Bulletin 2019/08**

(21) Numéro de dépôt: **14808673.9**

(22) Date de dépôt: **08.12.2014**

(51) Int Cl.:
***B01J 37/02*** *(2006.01)* ***B01J 37/20*** *(2006.01)*
***B01J 23/882*** *(2006.01)* ***B01J 23/883*** *(2006.01)*
***B01J 27/185*** *(2006.01)* ***B01J 27/188*** *(2006.01)*
***B01J 31/04*** *(2006.01)* ***B01J 31/02*** *(2006.01)*
***C10G 45/08*** *(2006.01)*

(86) Numéro de dépôt international:
**PCT/EP2014/076939**

(87) Numéro de publication internationale:
**WO 2015/086541 (18.06.2015 Gazette 2015/24)**

(54) **PROCEDE DE PREPARATION D'UN CATALYSEUR UTILE DANS UN PROCEDE D'HYDROCONVERSION ET/OU D'HYDROTRAITEMENT**

HERSTELLUNGSVERFAHREN EINES KATALYSATORS NÜTZLICH IN HYDROPROCESSING- UND HYDROKONVERSIONSVERFAHREN

PREPARATION PROCESS OF A CATALYST USEFUL IN HYDROPROCESSING AND HYDROCONVERSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2013 FR 1362559**

(43) Date de publication de la demande:
**19.10.2016 Bulletin 2016/42**

(73) Titulaire: **IFP Energies nouvelles**
**92500 Rueil-Malmaison (FR)**

(72) Inventeurs:
- **ROY-AUBERGER, Magalie**
  **F-38300 Nivolas-vermelle (FR)**
- **JAHEL, Ali**
  **F-69008 Lyon (FR)**

(74) Mandataire: **IFP Energies nouvelles**
**Rond-point de l'échangeur de Solaize**
**BP3**
**69230 Solaize (FR)**

(56) Documents cités:
**US-A1- 2007 072 765** **US-A1- 2011 294 656**
**US-A1- 2012 205 292** **US-A1- 2013 261 362**

Remarques:
Le dossier contient des informations techniques présentées postérieurement au dépôt de la demande et ne figurant pas dans le présent fascicule.

EP 3 079 815 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique

L'invention concerne une méthode de préparation d'un catalyseur pouvant être utilisé dans un procédé d'hydrocraquage et/ou d'hydrotraitement.

Généralement, un catalyseur d'hydrotraitement de coupes hydrocarbonées a pour but d'éliminer les composés soufrés, azotés ou aromatiques contenus dans celles-ci afin de mettre par exemple un produit pétrolier aux spécifications requises (teneur en soufre, teneur en aromatiques, etc...) pour une application donnée (carburant automobile, essence ou gazole, fioul domestique, carburéacteur, etc...). Il peut également s'agir de prétraiter cette charge afin d'en éliminer les impuretés avant de lui faire subir différents procédés de transformation pour en modifier les propriétés physico-chimiques, tels que par exemple les procédés de reformage, d'hydrocraquage de distillats sous vide, de craquage catalytique, d'hydroconversion de résidus atmosphériques ou sous vide. La composition et l'utilisation des catalyseurs d'hydrotraitement sont particulièrement bien décrites dans l'article de B. S. Clausen, H. T. Topsøe, et F.E. Massoth, issu de l'ouvrage Catalysis Science and Technology, volume 11 (1996), Springer-Verlag. Après sulfuration, plusieurs espèces de surface sont présentes sur le support, qui ne présentent pas toutes de bonnes performances pour les réactions souhaitées. Ces espèces sont particulièrement bien décrites, par exemple, dans la publication réalisée par Topsøe et al. parue dans le numéro 26 de Catalysis Review Science and Engineering de 1984, pages 395-420.

Le durcissement des normes de pollution automobile dans la communauté européenne (Journal Officiel de l'Union européenne, L76, 22 mars 2003, Directive 2003/70/CE, pages L76/10-L76/19) a contraint les raffineurs à réduire très fortement la teneur en soufre dans les carburants diesel et les essences (au maximum 10 parties par million poids (ppm) de soufre au 1er janvier 2009, contre 50 ppm au 1er janvier 2005). Par ailleurs, les raffineurs se trouvent contraints d'utiliser des charges de plus en plus réfractaires aux procédés d'hydrotraitement d'une part parce que les bruts sont de plus en plus lourds et contiennent par conséquent de plus en plus d'impuretés, et d'autre part du fait de l'augmentation des procédés de conversion dans les raffineries. En effet, ceux-ci génèrent des coupes pétrolières plus difficiles à hydrotraiter que les coupes directement issues de la distillation atmosphérique. A titre d'exemple, on peut mentionner la coupe gazole issue du craquage catalytique, aussi nommée LCO (Light Cycle Oil) en référence à sa teneur élevée en composés aromatiques. Ces coupes peuvent être traitées conjointement avec la coupe gazole issue de la distillation atmosphérique. Elles nécessitent des catalyseurs possédant des fonctions hydrodésulfurantes et hydrogénantes fortement améliorées par rapport aux catalyseurs traditionnels de façon à diminuer la teneur en aromatiques pour obtenir une densité et un indice de cétane en accord avec les spécifications.

En outre, les procédés de conversion comme le craquage catalytique ou l'hydrocraquage utilisent des catalyseurs possédant une fonction acide, ce qui les rend particulièrement sensibles à la présence d'impuretés azotées, et particulièrement les composés azotés basiques. Il est donc nécessaire d'utiliser des catalyseurs de prétraitement de ces charges de façon à enlever ces composés. Ces catalyseurs d'hydrotraitement requièrent également une fonction hydrogénante améliorée dans la mesure où la première étape d'hydrodéazotation est reconnue comme étant une étape d'hydrogénation du cycle aromatique adjacent à la liaison C-N.

Il apparaît donc intéressant de trouver des moyens de préparation des catalyseurs d'hydrotraitement, de manière à obtenir de nouveaux catalyseurs ayant des performances améliorées.

Dans ce cadre, les méthodes d'amélioration de l'activité des catalyseurs par l'ajout de molécules organiques aux différentes étapes de préparation des catalyseurs ont été intensivement étudiées depuis une trentaine d'années.

### Art Antérieur

L'ajout de molécule(s) organique(s) lors de la préparation des catalyseurs d'hydrotraitement et d'hydroconversion est une méthode bien connue pour améliorer les performances des catalyseurs d'hydrotraitement et d'hydroconversion . De larges variétés de molécules ont été testées depuis la fin des années 80.

On peut citer par exemple le brevet EP 0601722 de la compagnie Sumitomo qui décrit des additifs contenant 2 ou 3 fonctions alcool et de 2 à 10 carbone, ainsi que les éthers de ces alcools et les sucres monosaccharides et disaccharides . L'additif est ajouté à une solution des métaux des groupes VIB et VIII, en présence de $H_3PO_4$.

Plus récemment, la société Albemarle a décrit l'additivation sur un catalyseur dont les métaux sont sous forme oxyde d'un mélange d'acide et d'un autre additif ayant un point d'ébullition entre 80 et 500°C et une solubilité supérieure à $5 g.L^{-1}$. Optionnellement un traitement thermique final laissant au moins 50% de l'additif sur le catalyseur est réalisé (WO2005/035691).

IFP Energies nouvelles a déposé une demande de brevet FR 2 917 647 concernant l'additivation d'un catalyseur d'hydrotraitement à base d'un support amorphe contenant un métal du groupe VIB et un du groupe VIII qui a été séché ou calciné. Puis le catalyseur est imprégné par une solution contenant du phosphore et un ou plusieurs solvants dont les constantes diélectriques sont supérieures à 20 (tels que le méthanol, éthanol...). Ici aussi, les imprégnations des

catalyseurs sont réalisées dans un milieu acide.

En 2011, Petrochina dépose une demande de brevet EP 2,540,392 décrivant l'ajout d'une polyamine et d'ammoniaque dans la solution métallique servant à l'imprégnation (par immersion) du support pour la préparation de catalyseur d'hydrotraitement. L'introduction des métaux et de la polyamine est suivie d'un séchage et d'une calcination à 350-600°C. Cette méthode de préparation permet d'améliorer les performances des catalyseurs en hydrodésulfuration et en hydrodéazotation. Les polyamines citées sont EDTA, triéthylènediamine, triéthanolamine, éthylène diamine.

Les demandes de brevet US 2013/0261362 A1, US 2011/0294656 A1, US 2012/0205292 A1 et US 2007/0072765 A1 décrivent d'autres méthodes de préparation d'un catalyseur visant à améliorer l'activité catalytique des catalyseurs par l'ajout de molécules organiques durant la préparation desdits catalyseurs.

## Intérêt de l'invention

Les travaux de recherche effectués par le demandeur sur l'ajout de molécules carbonées lors de la préparation de catalyseurs d'hydrotraitement et/ou d'hydroconversion l'ont conduit à découvrir qu'un catalyseur comprenant une phase active contenant au moins un élément hydro-déshydrogénant choisi parmi les éléments du groupe VIB et du groupe VIII non noble de la classification périodique, pris seuls ou en mélange et un support oxyde amorphe ou partiellement cristallin, contenant éventuellement au moins un élément dopant en quantité contrôlée choisi parmi le phosphore, le bore et le silicium, et éventuellement un élément du groupe VIIA de la classification périodique des éléments, et préparé par imprégnation d'une solution contenant au moins une molécule organique de type zwitterionique en milieu basique, permettait d'obtenir une activité plus élevée, c'est-à-dire un niveau d'hydrotraitement et/ou d'hydroconversion plus élevé.

## Description succincte du procédé de préparation du catalyseur selon l'invention

L'invention concerne un procédé de préparation d'un catalyseur à partir d'un pré-catalyseur comprenant au moins un métal catalytique et un support, ledit métal catalytique étant choisi dans le groupe formé par les méatux des groupes VIB et VIII non-nobles, ledit pré-catalyseur ayant subi un traitement thermique à au moins 60°C sans calcination, procédé dans lequel ledit pré-catalyseur est imprégné avec une solution basique ayant un pH supérieur à 7,5 et contenant au moins une molécule sous forme zwittérionique , le pré-catalyseur imprégné est séché à une température d'au plus 240°C, sans calcination ultérieure, et la molécule sous forme zwittérionique est la bicine ou la tricine.

Une molécule organique de type zwitterionique, appelée communément zwitterion, est une espèce chimique moléculaire possédant des charges électriques formelles d'une unité, de signes opposées et situées en général sur des atomes non adjacents.

Le pH de l'imprégnation est généralement supérieur à 8,5 et de préférence supérieur à 10. La base utilisée est le plus souvent l'ammoniaque.

En général, la molécule sous forme zwittérionique est ajoutée dans une quantité telle que le rapport molaire molécule zwittérionique / GVIB, et plus particulièrement, le rapport molaire molécule /Mo soit compris entre 0,05 et 2,0.

Après imprégnation, le pré-catalyseur est soumis à une étape de mûrissement , de préférence pendant 0,1 à 10h et à une température de 15°C à 80°C. Avantageusement, le séchage est réalisé à une température comprise entre 50 et 240°C. Le séchage est réalisé de préférence après un mûrissement.

Par exemple, le pré-catalyseur comprend au moins un métal catalytique choisi dans le groupe formé par les métaux des groupes VIB et VIII non noble, et comprend éventuellement un élément promoteur choisi dans le groupe formé par le phosphore, le bore, le silicium, et de préférence le phosphore.

Généralement, le pré-catalyseur a été préparé par imprégnation à sec dudit support avec une solution dudit métal catalytique. Généralement, le pré-catalyseur a été traité thermiquement à une température comprise entre 60°C et 220°C.

Ledit catalyseur est soumis à une sulfuration après ledit séchage, de façon à former la phase métallique active, par exemple pour les procédés d'hydroconversion et/ou d'hydrocraquage.

Le catalyseur préparé avec le procédé ci-dessus décrit peut être utilisé dans un procédé d' hydrotraitement et/ou une hydroconversion de charge hydrocarbonée par mise en contact de ladite charge avec ledit catalyseur contenant au moins un métal du groupe VIB et au moins un métal du groupe VIII et lesdits métaux sont sous forme de sulfure.

## Description détaillée du procédé de préparation du catalyseur selon l'invention

Le procédé de préparation du catalyseur selon l'invention comprend les étapes successives suivantes à partir d'un support à base d'au moins une matrice minérale poreuse mise en forme et ayant subit un traitement thermique (on appellera ce produit "support"):

a) imprégnation du support par une solution d'imprégnation contenant au moins un métal catalytique ; de préférence la solution contient au moins un métal catalytique du groupe VIB et au moins un métal catalytique du groupe VIII non noble; l'imprégnation étant suivie d' éventuelle maturation ; on appellera le produit obtenu le "support imprégné".
b) traitement thermique à au moins 60°C sans calcination ultérieure, de préférence à une température d'au plus 220°C ; on appellera le produit obtenu "pré-catalyseur".
c) imprégnation du pré-catalyseur par une solution d'imprégnation basique comprenant au moins une molécule organique appelée zwitérion telle que définie précédemment suivie d'un éventuel mûrissement ; on appellera le produit obtenu "pré-catalyseur imprégné".
e) séchage à une température d'au plus 240°C et le plus souvent inférieure à 220°C, sans calcination ultérieure ; on appellera le produit obtenu "catalyseur".

Procédé de préparation du "support" selon l'invention

Le support du catalyseur selon l'invention est préparé avantageusement à partir d'une matrice minérale poreuse amorphe à base d'au moins un oxyde réfractaire contenant ou non une zéolithe.

La matrice minérale poreuse est avantageusement choisie dans le groupe formé par l'alumine, la silice, les argiles, l'oxyde de titane, les oxydes de bore ou de phosphore et la zircone, pris seuls ou en mélange. Dans le cadre de l'invention, on préfère utiliser des matrices contenant majoritairement de l'alumine, sous toutes ces formes connues de l'homme du métier, par exemple sous forme d'alumine gamma. On peut aussi avantageusement utiliser des mélanges d'alumine et de silice, des mélanges d'alumine et de silice-alumine, des mélanges d'alumines et de zéolithes, ou bien des mélanges d'alumines, de silice-alumine et de zéolithes. De manière préférée, le support du catalyseur selon l'invention contient uniquement de l'alumine ou de la silice-alumine avec éventuellement le(s) métal (métaux) et/ou le(s) dopant(s) qui ont été introduits en-dehors des imprégnations (Groupe VIB, groupe VIII, P, Si, F,...) avant ou pendant la mise en forme du support.

Le support peut avantageusement être mis en forme par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier. Les catalyseurs selon l'invention peuvent éventuellement être fabriqués et employés sous la forme de poudre concassée, d'extrudés, de tablettes, d'anneaux, de billes, ou de roues. La méthode de mise en forme avantageuse selon l'invention est l'extrusion et les formes d'extrudés préférées sont cylindriques (qui peuvent être creuses ou non), cylindriques torsadées ou multilobées (2, 3, 4 ou 5 lobes par exemple). Il est aussi avantageux que le catalyseur se présente sous forme d'extrudés d'un diamètre compris entre 0,4 et 5 mm et plus particulièrement entre 0,9 et 2,5 mm. Le solide mis en forme est alors séché à une température comprise entre 60 et 250°C et calciné à une température comprise entre 250 et 800°C pendant une durée comprise entre 30 minutes et 6 heures pour aboutir au support tel que défini dans le cadre de l'invention.

Procédé de préparation du "support imprégné" selon l'invention

Le métal (les métaux) catalytique(s) est introduit par imprégnation d'une solution aqueuse sur le support tel que défini dans le cadre de l'invention.

De préférence, il s'agit de l''introduction d'au moins un métal du groupe VIB et d'au moins un métal du groupe VIII non noble de la classification périodique, et éventuellement d'au moins un élément promoteur du groupe VIIA et éventuellement d'au moins un élément du groupe VB tel que le phosphore.

L'imprégnation des différents métaux/éléments peut être réalisée en une ou plusieurs étapes. L'imprégnation de la solution peut être réalisée par toutes les méthodes bien connues de l'homme de métier, c'est-à-dire par une ou plusieurs opérations d'imprégnation du support tel que défini dans le cadre de l'invention par une solution contenant les précurseurs du ou des métaux et contenant éventuellement le précurseur d'au moins un élément promoteur comme le phosphore et éventuellement le précurseur d'au moins un élément du groupe VIIA et/ou du groupe VB.

Tous les métaux du groupe VIB peuvent être utilisés selon l'invention. De manière préférée, les métaux du groupe VIB utilisés selon l'invention sont le tungstène et le molybdène, seuls ou en mélange. De manière encore plus préférée, le métal du groupe VIB selon l'invention est le molybdène.

Les sources de molybdène et de tungstène sont avantageusement choisies parmi les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Tous les métaux du groupe VIII non noble peuvent être utilisés selon l'invention. De manière préférée, les métaux du groupe VIII non noble utilisés selon l'invention sont le nickel et le cobalt, seuls ou en mélange.

Les métaux catalytiques sont en général une combinaison des métaux des groupes VIII (de préférence Co et/ou Ni) et des métaux du groupe VIB (de préférence Mo). Les sources de métal du groupe VIII non noble qui peuvent être utilisées sont bien connues de l'homme du métier. Par exemple, pour les métaux non nobles, on utilisera les nitrates, les sulfates, les hydroxydes, les phosphates, les halogénures comme par exemple, les chlorures, les bromures et les fluorures, les carboxylates comme par exemple les acétates et les carbonates.

De manière générale, la teneur totale en éléments hydro-déshydrogénants, c'est-à-dire en métal(aux) du groupe VIII et en métal(aux) du groupe VIB, est supérieure à 6 % poids de métaux des groupes VIB et VIII (calculé oxyde) par rapport au poids total du pré-catalyseur, de préférence elle est comprise entre 5 et 50 % poids de métaux (calculé oxyde) des groupes VIB et VIII par rapport au poids total du pré-catalyseur. La teneur en métal(aux) du groupe VIB est comprise entre 4 et 40% poids de métal(aux) (calculé oxyde) du groupe VIB par rapport au poids total du pré-catalyseur, de préférence entre 8 et 35% poids et de manière plus préférée entre 10 et 30% poids de métal(aux)(calculé oxyde) du groupe VIB par rapport au poids total du pré-catalyseur. La teneur en métal(aux) du groupe VIII est comprise entre 1 et 10% poids de métal(aux) (calculé oxyde) du groupe VIII par rapport au poids total du pré-catalyseur, de préférence entre 1,5 et 9% poids et de manière plus préférée entre 2 et 8% poids de métal(aux) (calculé oxyde) du groupe VIII par rapport au poids total du pré-catalyseur. Les pourcentages poids en métaux des groupes VIII et VIB indiqués ci-dessus sont exprimés par rapport au poids total du pré-catalyseur du procédé de préparation selon l'invention.

Le rapport molaire métal(aux) du groupe VIII sur métal(aux) du groupe VIB dans le catalyseur est préférentiellement compris entre 0.05 et 0.9, très préférentiellement compris entre 0.1 et 0.8, et de manière encore plus préférée compris entre 0.2 et 0.6.

Un élément promoteur du groupe VB préféré selon l'invention est le phosphore. La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole. Les acides tungsto-phosphorique ou tungsto-molybdique peuvent être employés.

La teneur en phosphore est ajustée, sans que cela limite la portée de l'invention, de telle manière à former un composé mixte en solution et/ou sur le support par exemple tungstène -phosphore ou molybdène-tungstène-phosphore. Ces composés mixtes peuvent être des hétéropolyanions. Ces composés peuvent être des hétéropolyanions d'Anderson, par exemple. Le phosphore peut également être introduit en même temps que le(s) élément(s) du groupe VIB sous la forme d'hétéropolyanions de Keggin, Keggin lacunaire, Keggin substitué ou de type Strandberg.

La teneur en phosphore est de préférence comprise entre 0,1 et 20 % poids de $P_2O_5$, de manière plus préférée entre 0,2 et 15 % poids de $P_2O_5$, de manière très préférée entre 0,3 et 10 % poids de $P_2O_5$. Le pourcentage est exprimé par rapport au poids total du pré-catalyseur du procédé de préparation selon l'invention. Lorsque le catalyseur contient au moins un métal du groupe VIB, la quantité de phosphore est telle que le rapport molaire phosphore sur métal(ux) du groupe VIB dans le pré-catalyseur est supérieur ou égal à 0,11, de préférence supérieur ou égal à 0,25, et de manière préférée inférieur ou égal à 2 voire à 1,4.

Après imprégnation, l'échantillon est ensuite mis à mâturer entre 15 min et 10h, de manière préférée entre 30 min et 5 h et de manière encore plus préférée entre 1h et 4h pour aboutir au support imprégné selon l'invention.

Après imprégnation et éventuelle maturation, le support imprégné est ensuite séché à une température comprise entre 60 et 220°C pour aboutir au pré-catalyseur selon l'invention.

Procédé de préparation du "pré-catalyseur imprégné" selon l'invention

Le pré-catalyseur selon l'invention est ensuite imprégné avec une solution contenant au moins une molécule organique de type zwitterionique (qu'on appellera également zwitterion dans le texte) en milieu basique. Dans le cadre de l'invention, les zwitterions sont la bicine et la tricine. Une représentation spatiale de la bicine (A) et de la tricine (B) est donnée ci-dessous :

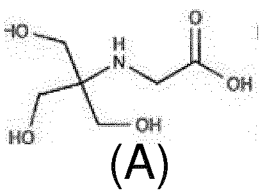
(A)

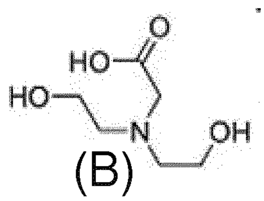
(B)

La quantité de molécule « zwitterion » ajoutée est ajustée à la quantité de métal du groupe VIB engagée, de telle manière que le rapport molaire zwittérion/métal du GVIB, et plus particulièrement, le rapport molaire molécule

zwitérion / Mo soit compris entre 0,05 et 2,0, et de manière préférée entre 0,2 et 1,5.

Le pH d'imprégnation de la solution contenant les zwitterions et la base doit être supérieur à 7,5, de manière préférée supérieur à 8,5 et de manière encore plus préférée supérieur à 10,0. La base utilisée est le plus souvent l'ammoniaque.

Généralement, une seule étape d'imprégnation suffit. Ceci permet des économies au niveau de l'industrialisation, et une simplification de la chaîne d'imprégnation, surtout si un séchage intermédiaire est nécessaire entre les imprégnations.

De préférence, après l'étape d'imprégnation, le pré-catalyseur imprégné subit ensuite une étape de mûrissement. De préférence, elle est réalisée pendant une durée comprise entre 0,1 et 10h, de manière préférée entre 0,5 et 7h et de manière très préférée entre 1 et 5h, et à une température comprise entre 15°C et 80°C, de préférence entre 20°C et 50°C.

Après l'imprégnation et de préférence après le mûrissement, le pré-catalyseur imprégné subit une étape de séchage réalisée à une température comprise entre 50 et 240°C, de manière préférée entre 60 et 220°C et de manière très préférée entre 75 et 200°C. L'étape de séchage peut être réalisée soit sous oxygène, air ou azote ou un mélange de ces gaz. On obtient alors le catalyseur.

Il n'y a pas de calcination ultérieure c'est-à-dire réalisée après le séchage. Bien évidemment, les températures de séchage selon l'invention ne sont pas des calcinations. L'invention ne concerne pas les catalyseurs calcinés ou régénérés. Elle ne concerne que les catalyseurs dits frais ou neufs (jamais utilisés) et qui sont séchés.

Procédé de préparation du "catalyseur sulfuré" selon l'invention

Le procédé de préparation du catalyseur selon l'invention comprend avantageusement au moins une étape de sulfuration.

La phase active du catalyseur se présente sous forme sulfure. Le catalyseur peut alors être mis en oeuvre dans un procédé d'hydrotraitement et/ou d'hydroconversion, comme cela sera décrit plus loin dans la présente description.

Ce traitement d'activation par sulfuration est bien connu de l'Homme du métier et peut être effectué par toute méthode connue de l'Homme du métier. La sulfuration est réalisée par la mise en contact du catalyseur préparé selon le procédé de l'invention avec au moins un composé organique soufré décomposable et générateur d'$H_2S$ ou par la mise en contact direct du catalyseur avec un flux gazeux d'$H_2S$, par exemple dilué dans l'hydrogène. Le composé organique soufré est avantageusement choisi parmi les alkyldisulfures tels que le disulfure de diméthyle (DMDS), les alkylsulfures tel que le sulfure de diméthyle, les mercaptans tel que le n-butylmercaptan, les composés polysulfures de type tertiononylpolysulfure tels que le TPS-37 ou le TPS-54 commercialisés par la société ARKEMA, ou tout autre composé connu de l'Homme du métier permettant d'obtenir une bonne sulfuration du catalyseur. La sulfuration peut être réalisée in situ (c'est-à-dire après chargement du catalyseur dans l'unité réactionnelle du procédé d'hydrotraitement et/ou d'hydroconversion) ou ex-situ (c'est-à-dire avant chargement du catalyseur dans l'unité réactionnelle) à une température généralement comprise entre 200 et 600°C et plus préférentiellement entre 300 et 500°C.

Procédés utilisant le catalyseur obtenu par le procédé de préparation selon l'invention

Les catalyseurs obtenus par le procédé selon l'invention sont avantageusement utilisés pour les réactions d'hydrotraitement ou d'hydroconversion de charges hydrocarbonées telles que les coupes pétrolières, les coupes issues du charbon ou les hydrocarbures produits à partir du gaz naturel . On comprendra par hydrotraitement les réactions d'hydrogénation, d'hydrodéazotation, d'hydrodésaromatisation, d'hydrodésulfuration, d'hydrodémétallation.

Ces catalyseurs peuvent avantageusement être utilisés lors d'un hydrocraquage doux opéré comme prétraitement des charges de craquage catalytique ou d'hydrocraquage. Ils sont également utilisables pour l'hydrodésulfuration des résidus. Ces catalyseurs présentent des performances remarquables dans les procédés d' l'hydrodésulfuration poussée des gazoles (ULSD Ultra Low Sulfur Diesel) ou pour les procédés visant à obtenir un indice de cétane amélioré.

Dans ces utilisations, les catalyseurs obtenus par le procédé selon l'invention présentent des performances améliorées , et notamment une activité améliorée, par rapport aux catalyseurs de l'art antérieur.

Les charges employées dans les procédés d'hydrotraitement sont par exemple des kérosènes, des gas-oils, des gas-oils sous vide, des résidus atmosphériques, des résidus sous vide, des distillats atmosphériques, des distillats sous vide, des résidus ou des bruts désasphaltés, des charges provenant des procédés de conversions thermiques ou catalytiques, des charges issues de la biomasse, prises seules ou en mélanges. Les charges qui sont traitées, et en particulier celles citées ci-dessus, contiennent généralement des hétéroatomes tels que le soufre, l'oxygène et l'azote et, pour les charges lourdes, elles contiennent le plus souvent également des métaux provenant des charges traitées et qui désactivent le catalyseur.

Les conditions opératoires utilisées dans les procédés d'hydrotraitement et/d'hydroconversion de charges

hydrocarbonées sont généralement les suivantes : la température est avantageusement comprise entre 180 et 450°C, et de préférence entre 250 et 440°C, la pression est avantageusement comprise entre 0,5 et 300 bar, et de préférence entre 1 et 180 bar, la vitesse volumique horaire est avantageusement comprise entre 0,1 et $20h^{-1}$ et de préférence entre 0,2 et 5 $h^{-1}$, et le rapport hydrogène/charge exprimé en volume d'hydrogène, mesuré dans les conditions normales de température et pression, par volume de charge liquide est avantageusement compris entre 50L/L à 2000 L/L.

Les exemples qui suivent démontrent le gain d'activité important sur l'utilisation selon l'invention des catalyseurs préparés selon l'invention par rapport aux catalyseurs de l'art antérieur et précisent l'invention sans toutefois en limiter la portée.

Exemple 1 : Préparation des catalyseurs CoMoP sur alumine A1 et A2 (non-conformes à l'invention)

Une matrice composée de gel d'alumine, commercialisée sous le nom SB3 par la société Condéa Chemie GmbH a été utilisée. Ce gel a été mélangé à une solution aqueuse contenant de l'acide nitrique à 66 % (7 % en poids d'acide par gramme de gel sec), puis malaxé pendant 15 minutes. A l'issue de ce malaxage, la pâte obtenue est passée à travers une filière ayant des orifices cylindriques de diamètre égal à 1,6 mm. Les extrudés sont ensuite séchés pendant une nuit à 120°C, puis calcinés à 600°C pendant 2 heures sous air humide contenant 50 g d'eau par kg d'air sec. On obtient ainsi des extrudés de support, ayant une surface spécifique de 300 $m^2/g$. L'analyse par la diffraction des rayons X révèle que le support est uniquement composé d'alumine gamma cubique de faible cristallinité.

Sur le support d'alumine décrit précédemment et qui se présente sous la forme « extrudé » on ajoute du cobalt, du molybdène et du phosphore. La solution d'imprégnation est préparée par dissolution à chaud de l'oxyde de molybdène (24,34g) et d'hydroxyde de cobalt (5,34g) dans la solution d'acide phosphorique (7,47g) en solution aqueuse. Après imprégnation à sec, les extrudés sont laissés à maturer en atmosphère saturée en eau pendant 12 h, puis ils sont séchés une nuit à 90°C. Le pré-catalyseur séché ainsi obtenu est noté A1.

La calcination du précurseur catalytique A1 à 450°C pendant 2 heures conduit à un pré- catalyseur calciné A2, non conforme à l'invention.

La composition finale des catalyseurs A1 et A2 exprimée sous forme d'oxydes est alors la suivante : $MoO_3$ = 21,8%poids, CoO = 4,6%poids) et $P_2O_5$ = 7,1%poids.

Le catalyseur calciné A2 est chargé dans une unité lit traversé et sulfuré par un gazole de distillation directe additivé de 2%poids de disulfure de diméthyle. Un test d'HDS d'un mélange de gazole de distillation directe et d'un gazole en provenance du craquage catalytique est alors conduit pendant 300h.

Exemple 2 : Préparation de catalyseurs CoMoP additivés A3 à A8 (conformes à l'invention)

Les catalyseurs A3 à A8 ont été préparés par imprégnation du pré-catalyseur séché A1 par une solution aqueuse contenant de la bicine ou de la tricine en mélange avec de l'ammoniaque. La composition des solutions imprégnées est donnée dans le Tableau 1.

Le pré-catalyseur imprégné est ensuite soumis à une étape de maturation de 3h sous air à température ambiante, suivie d'une étape de traitement thermique à 140°C pendant 2h sous azote (0,065L/h/g catalyseur).

Tableau 1 : Composition des solutions imprégnées sur les catalyseurs A3 à A8.

| Molécule zwittérion | Bicine | | | Tricine | | |
|---|---|---|---|---|---|---|
| Réf. Echantillon | A3 | A4 | A5 | A6 | A7 | A8 |
| Molécule zwittérion/ Mo (mol /mol) | 0,6 | 0,7 | 0,8 | 0,8 | 0,9 | 1 |
| Concentration en Molécule zwittérion dans la solution (mol/L) | 2,2 | 2,6 | 3,0 | 3,0 | 3,4 | 3,7 |
| Masse de $NH_4OH$ (g) | 0,24 | 0,24 | 0,24 | 0,24 | 0,24 | 0,24 |
| pH de la solution | >10 | | | | | |

Exemple 3 : Test comparatif des catalyseurs A1 à A8 en hydrogénation du toluène dans le cyclohexane sous pression et en présence d'hydrogène sulfuré.

Les catalyseurs précédemment décrits, sont sulfurés in situ en dynamique dans le réacteur tubulaire à lit fixe traversé d'une unité pilote. Les mesures d'activité hydrogénante sont effectuées immédiatement après la sulfuration sous pression et sans remise à l'air avec la charge d'hydrocarbures qui a servi à sulfurer les catalyseurs.

La charge de sulfuration et de test est composée de 5,8 % de diméthyldisulfure (DMDS), 20 % de toluène et

74,2 % de cyclohexane (en poids). la sulfuration est effectuée dès température ambiante jusqu'à 350°C, avec une rampe de température de 2°C/min, une VVH = $4h^{-1}$ et $H_2$/HC = 450 NL/L. Le test catalytique est effectué à 350°C à VVH = $2h^{-1}$ et $H_2$/HC équivalent à celui de la sulfuration, avec prélèvement minimum de 4 recettes qui sont analysées par chromatographie en phase gazeuse

On mesure ainsi les activités catalytiques stabilisées de volumes égaux de catalyseurs dans la réaction d'hydrogénation du toluène. Les conditions détaillées de mesure d'activité sont données dans le Tableau 2.

Tableau 2 : Conditions du test d'hydrogénation du toluène.

| | |
|---|---|
| Pression totale | 6,0 MPa |
| Pression de toluène | 0,37 MPa |
| Pression de cyclohexane | 1,42 MPa |
| Pression de méthane | 0,22 MPa |
| Pression d'hydrogène | 3,68 MPa |
| Pression d'$H_2S$ | 0,22 MPa |
| Vitesse spatiale horaire | 2 $h^{-1}$ |
| Température de sulfuration et de test | 350°C |

Des prélèvements de l'effluent liquide sont analysés par chromatographie en phase gazeuse. La détermination des concentrations molaires en toluène non converti (T) et des concentrations ses produits d'hydrogénation (le méthylcyclohexane (MCC6), l'éthylcyclopentane (EtCC5) et les diméthylcyclopentanes (DMCC5)) permettent de calculer un taux d'hydrogénation de toluène $X_{HYD}$ défini par :

$$X_{HYD}(\%) = 100 \times \frac{MCC6 + EtCC5 + DMCC5}{T + MCC6 + EtCC5 + DMCC5}$$

La réaction d'hydrogénation du toluène étant d'ordre 1 dans les conditions de test mises en oeuvre et le réacteur se comportant comme un réacteur piston idéal, on calcule l'activité hydrogénante $A_{HYD}$ des catalyseurs en appliquant la formule :

$$A_{HYD} = \ln\left(\frac{100}{100 - X_{HYD}}\right)$$

Le Tableau 3 compare les activités hydrogénantes relatives des catalyseurs égales au rapport de l'activité du catalyseur additivé sur l'activité du pré-catalyseur calciné A2 (non conforme) pris comme référence (activité 100 %).

Tableau 3 : Activités relatives en test d'hydrogénation du toluène par rapport au catalyseur calciné A2 (non conforme) en hydrogénation du toluène des catalyseurs additivés A3 à A8 (conformes).

| Catalyseur | Composition solution d'additivation | $A_{HYD}$ relative par rapport à A2 (% +/- 5%) |
|---|---|---|
| A2 calciné non conforme | - | 100 |
| A3 conforme | Bicine / $NH_4OH$ (Bicine/Mo = 0,6mol/mol) | 115 |
| A4 conforme | Bicine / $NH_4OH$ (Bicine/Mo = 0,7mol/mol) | 117 |
| A5 conforme | Bicine / $NH_4OH$ (Bicine/Mo = 0,8mol/mol) | 123 |
| A6 conforme | Tricine / $NH_4OH$ (Tricine/Mo = 0,8mol/mol) | 113 |

(suite)

| Catalyseur | Composition solution d'additivation | $A_{HYD}$ relative par rapport à A2 (% +/- 5%) |
|---|---|---|
| A7 conforme | Tricine / $NH_4OH$ (Tricine/Mo = 0,9mol/mol) | 112 |
| A8 conforme | Tricine / $NH_4OH$ (Tricine/Mo = 1,0mol/mol) | 131 |

Les résultats résumés dans le Tableau 3 montrent que tous les catalyseurs additivés avec de la bicine ou de la tricine en milieu basique préparés selon l'invention ont des performances améliorées en test d'hydrogénation du toluène par rapport à la référence calcinée non-conforme.

Exemple 4 : Test comparatif des catalyseurs A2 calciné (non-conforme) et A1 à A8 (conformes) en HDS de gazole des catalyseurs.

Les catalyseurs A2 (non-conforme) et A3 à A8 (conformes) ont été testés en HDS de gazole. La composition de la charge est donnée dans le Tableau 4.

Tableau 4 : Composition de la charge d'HDS de gazole.

| | | |
|---|---|---|
| Densité à 15 °C (g/cc) | | 0,8522 |
| Soufre (%poids) | | 1,44 |
| Distillation Simulée | PI | 155°C |
| | 10 % | 247°C |
| | 50 % | 315°C |
| | 90 % | 392°C |
| | PF | 444°C |

Le test est mené dans un réacteur pilote isotherme à lit fixe traversé, les fluides circulant de bas en haut. Après sulfuration in situ à 350 °C dans l'unité sous pression au moyen du gazole du test auquel est additionné 2 % en poids de diméthyldisulfure, le test d'hydrodésulfuration a été conduit dans les conditions opératoires données dans le Tableau 5.

Tableau 5 : Conditions des tests d'hydrotraitement du GO.

| | |
|---|---|
| Pression totale | 7 MPa |
| Volume de catalyseur | 30 $cm^3$ |
| Débit d'hydrogène | 24 L/h |
| Débit de charge | 60 $cm^3$ /h |

Les performances catalytiques des catalyseurs testés en HDS de gazole sont données dans le Tableau 6. Elles sont exprimées en activité relative. L'activité relative des catalyseurs est mesurée en ajustant la température du procédé pour atteindre un niveau de soufre de 10ppm dans les produits formés. Plus cette température est basse, plus le catalyseur sera actif. L'activité du catalyseur calciné A2 est considérée ici comme la performance de base.

Tableau 6 : Activités relatives en HDS de gazole par rapport au catalyseur calciné A2 (non conforme) en hydrotraitement de GO des catalyseurs additivés A3 à A8 (conformes).

| Catalyseur | Composition solution d'additivation | Température pour atteindre 10 ppm S dans les effluents |
|---|---|---|
| A2 calciné non conforme | - | Base |
| A3 conforme | Bicine / $NH_4OH$ (Bicine/Mo = 0,6mol/mol) | Base - 5°C |

(suite)

| Catalyseur | Composition solution d'additivation | Température pour atteindre 10 ppm S dans les effluents |
|---|---|---|
| A4 conforme | Bicine / $NH_4OH$ (Bicine/Mo = 0,7mol/mol) | Base - 5°C |
| A5 conforme | Bicine / $NH_4OH$ (Bicine/Mo = 0,8mol/mol) | Base - 6°C |
| A6 conforme | Tricine / $NH_4OH$ (Tricine/Mo = 0,8mol/mol) | Base - 4°C |
| A7 conforme | Tricine / $NH_4OH$ (Tricine/Mo = 0,9mol/mol) | Base - 5°C |
| A8 conforme | Tricine / $NH_4OH$ (Tricine/Mo = 1,0mol/mol) | Base - 7°C |

De manière similaire aux résultats obtenus en hydrogénation du toluène, les résultats résumés dans le Tableau 6 montrent que tous les catalyseurs additivés avec de la bicine ou de la tricine en milieu basique préparés selon l'invention ont des performances améliorées en HDS de gazole par rapport à la référence calcinée non-conforme.

Les exemples montrent que la molécule sous forme zwittérionique choisie entre la bicine et la tricine produit des catalyseurs performants à elle-seule sans qu'il soit besoin d'ajouter une autre molécule, par exemple un chélatant.

## Revendications

1. Procédé de préparation d'un catalyseur à partir d'un pré-catalyseur comprenant au moins un métal catalytique et un support, ledit métal catalytique étant choisi dans le groupe formé par les métaux des groupes VIB et VIII non noble, ledit pré-catalyseur ayant subi un traitement thermique à au moins 60°C sans calcination, procédé dans lequel ledit pré-catalyseur est imprégné avec une solution basique ayant un pH supérieur à 7,5 et contenant au moins une molécule sous forme zwittérionique , le pré-catalyseur imprégné est séché à une température d'au plus 240°C, sans calcination ultérieure, et la molécule sous forme zwittérionique est la bicine ou la tricine.

2. Procédé selon la revendication 1 dans lequel l'imprégnation a lieu à pH supérieur à 8,5 et de préférence supérieur à 10.

3. Procédé selon la revendication 2 dans lequel la base est de l'ammoniaque.

4. Procédé selon l'une des revendications précédentes dans lequel après imprégnation, le pré-catalyseur est soumis à une étape de mûrissement , de préférence pendant 0,1 à 10h et à une température de 15°C à 80°C.

5. Procédé selon l'une des revendications précédentes dans lequel le séchage est réalisé à une température comprise entre 50 et 240°C.

6. Procédé selon l'une des revendications précédentes dans lequel ledit pré-catalyseur comprend du phosphore.

7. Procédé selon la revendication 6 dans lequel ledit pré-catalyseur comprend également du bore et/ou du silicium.

8. Procédé selon l'une des revendications précédentes dans lequel ladite molécule est ajoutée dans une quantité telle que le rapport molaire molécule/GVIB, et plus particulièrement, le rapport molaire molécule /Mo soit compris entre 0,05 et 2,0.

9. Procédé selon l'une des revendications précédentes dans lequel ledit pré-catalyseur a été préparé par imprégnation à sec dudit support avec une solution dudit métal catalytique.

10. Procédé selon l'une des revendications précédentes dans lequel ledit pré-catalyseur a été traité thermiquement à une température comprise entre 60°C et 220°C.

11. Procédé selon l'une des revendications précédentes dans lequel ledit catalyseur est soumis à une sulfuration après ledit séchage.

## Patentansprüche

1. Verfahren zur Herstellung eines Katalysators aus einem Vor-Katalysator, umfassend mindestens ein katalytisches Metall und einen Träger, wobei das katalytische Metall in der Gruppe ausgewählt ist, die von den Metallen der Gruppen VIB und VIII, nicht Edelmetall, gebildet ist, wobei der Vor-Katalysator einer Wärmebehandlung bei mindestens 60 °C ohne Kalzinieren unterzogen wurde, wobei bei dem Verfahren der Vor-Katalysator mit einer basischen Lösung imprägniert wird, die einen pH-Wert über 7,5 hat und mindestens ein Molekül in zwitterionischer Form enthält, wobei der imprägnierte Vor-Katalysator bei einer Temperatur von höchstens 240 °C ohne späteres Kalzinieren getrocknet wird, und das Molekül in zwitterionischer Form Bicin oder Tricin ist.

2. Verfahren nach Anspruch 1, bei dem das Imprägnieren bei einem pH-Wert über 8,5 und vorzugsweise über 10 stattfindet.

3. Verfahren nach Anspruch 2, bei dem die Base Ammoniak ist.

4. Verfahren nach einem der vorhergehenden Ansprüche, bei dem nach dem Imprägnieren der Vor-Katalysator einem Reifungsprozess vorzugsweise während 0,1 bis 10 h und bei einer Temperatur von 15 °C bis 80 °C unterzogen wird.

5. Verfahren nach einem der vorhergehenden Ansprüche, bei dem das Trocknen bei einer Temperatur zwischen 50 und 240 °C durchgeführt wird.

6. Verfahren nach einem der vorhergehenden Ansprüche, bei dem der Vor-Katalysator Phosphor umfasst.

7. Verfahren nach Anspruch 6, bei dem der Vor-Katalysator auch Bor und/oder Silizium umfasst.

8. Verfahren nach einem der vorhergehenden Ansprüche, bei dem das Molekül in einer derartigen Menge hinzugefügt wird, dass das Molverhältnis Molekül/GVIB und insbesondere das Molverhältnis Molekül/Mo zwischen 0,05 und 2,0 beträgt.

9. Verfahren nach einem der vorhergehenden Ansprüche, bei dem der Vor-Katalysator durch Trockenimprägnieren des Trägers mit einer Lösung des katalytischen Metalls hergestellt wurde.

10. Verfahren nach einem der vorhergehenden Ansprüche, bei dem der Vor-Katalysator bei einer Temperatur zwischen 60 °C und 220 °C wärmebehandelt wurde.

11. Verfahren nach einem der vorhergehenden Ansprüche, bei dem der Katalysator einem Sulfidieren nach dem Trocknen unterzogen wird.

## Claims

1. A process for the preparation of a catalyst starting from a pre-catalyst comprising at least one catalytic metal and a support, said catalytic metal being selected from the group formed by metals from group VIB and non-noble group VIII, said pre-catalyst having undergone a heat treatment at least 60°C without calcining, in which process said pre-catalyst is impregnated with a basic solution having a pH of more than 7.5 and containing at least one molecule in the zwitterionic form, and the impregnated pre-catalyst is dried at a temperature of at most 240°C without subsequent calcining, and the molecule in the zwitterionic form is bicine or tricine.

2. The process according to claim 1, in which impregnation is carried out at a pH of more than 8.5, preferably more than 10.

3. The process according to claim 2, in which the base is ammonia.

4. The process according to one of the preceding claims, in which after impregnation, the pre-catalyst undergoes a

maturation step, preferably for 0.1 to 10 h and at a temperature of 15°C to 80°C.

5. The process according to one of the preceding claims, in which drying is carried out at a temperature in the range 50°C to 240°C.

6. The process according to one of the preceding claims, in which said pre-catalyst comprises phosphorus.

7. The process according to claim 6, in which said pre-catalyst also comprises boron and/or silicon.

8. The process according to one of the preceding claims, in which said molecule is added in a quantity such that the molecule/GVIB molar ratio, and more particularly the molecule/Mo molar ratio, is in the range 0.05 to 2.0.

9. The process according to one of the preceding claims, in which said pre-catalyst has been prepared by dry impregnation of said support with a solution of said catalytic metal.

10. The process according to one of the preceding claims, in which said pre-catalyst has been heat treated at a temperature in the range 60°C to 220°C.

11. The process according to one of the preceding claims, in which said catalyst undergoes sulphurization after said drying.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0601722 A
- WO 2005035691 A
- FR 2917647
- EP 2540392 A
- US 20130261362 A1
- US 20110294656 A1
- US 20120205292 A1
- US 20070072765 A1

### Littérature non-brevet citée dans la description

- **B. S. CLAUSEN ; H. T. TOPSØE ; F.E. MASSOTH.** Catalysis Science and Technology. Springer-Verlag, 1996, vol. 11
- **TOPSØE et al.** *Catalysis Review Science and Engineering,* 1984, 395-420